# EUROPEAN PATENT SPECIFICATION

(11) **EP 3 954 928 B1**
(45) Date of publication and mention of the grant of the patent: **22.01.2025**
(21) Application number: 20788101.2
(22) Date of filing: 30.03.2020
(51) Int. Cl.: F16K 5/06, F16K 11/056, F16K 31/04, F16K 31/53

(54) **FLOW PASSAGE SWITCHING VALVE AND ASSEMBLY METHOD FOR SAME**
DURCHFLUSSUMSCHALTVENTIL UND MONTAGEVERFAHREN DAFÜR
SOUPAPE DE COMMUTATION DE PASSAGE D'ÉCOULEMENT ET SON PROCÉDÉ D'ASSEMBLAGE

(30) Priority: 11.04.2019 JP 2019075466
(43) Date of publication of application: 16.02.2022
(73) Proprietor: Fujikoki Corporation, Tokyo 158-0082 (JP)
(72) Inventor: MOCHIZUKI Kenichi, Tokyo 158-0082 (JP); KONDO Daisuke, Tokyo 158-0082 (JP); HARA Seiichi, Tokyo 158-0082 (JP)
(74) Representative: Ter Meer Steinmeister & Partner
(86) International application number: PCT/JP2020/014527
(87) International publication number: WO 2020/209122

(56) References cited:
- WO-A1-2020/116072
- JP-A- 2000 065 245
- JP-A- 2018 044 768
- JP-A- 2020 091 006
- US-A- 6 021 652
- US-A1- 2008 060 706
- US-A1- 2014 231 684
- US-A1- 2015 137 018

## Description

### Technical Field

The present invention relates to a flow channel switching valve that switches connection of flow channels by rotating a valve member, and a method for assembling the flow channel switching valve.

### Background Art

An example of a conventional flow channel switching valve is disclosed in Patent Literature 1. This flow channel switching valve is used as a rotary three-way switching valve. The flow channel switching valve includes a valve body having a valve chamber, a circular tubular valve member rotatably disposed in the valve chamber, a rotation drive unit that rotates the valve member around a rotation axis, and a valve stem that transmits a rotational force of the rotation drive unit to the valve member. A protrusion having a D-cut shape for attachment of a rotation angle sensor that detects the rotation angle of the valve member is integrally provided on the upper end surface of the valve stem.

US 6,021,652 discloses a known valve comprising a rotation angle detection unit.

WO 2020/116072 discloses a flow passage switching valve comprising a rotational position detection section for detecting rotational position of a ball valve body, having a potentiometer for detecting the rotational angle of a valve shaft, and also having a potentiometer base for supporting the potentiometer. The potentiometer base has a base body section mounted to a case, and a sensor support section to which the potentiometer is mounted and which is disposed facing a circular column section of the valve shaft. The sensor support section is provided with a circular arc-shaped positioning through hole extending along the outer peripheral surface of the circular column section of the valve shaft.

### Citation List

### Patent Literature

Patent Literature 1: Japanese Unexamined Patent Application Publication No. 2017-223299

### Summary of Invention

### Technical Problem

However, with such a flow channel switching valve, there has been a possibility that the output of the rotation angle sensor with respect to the rotational position of the valve member includes an error due to accumulation of the tolerances of the valve member, the valve stem, the rotation angle sensor, and so forth. Thus, there has been room for improvement in the precision of the rotational position of the valve member in a flow channel switching operation.

Therefore, an object of the present invention is to provide a flow channel switching valve capable of effectively improving precision of a rotational position of a valve member, and a method for assembling the flow channel switching valve.

### Solution to Problem

To attain the above-described object, a flow channel switching valve according to an aspect of the present invention is a flow channel switching valve including a valve body provided with a valve chamber and a plurality of flow channels that communicate with the valve chamber, a valve member that is rotatably housed in the valve chamber and that switches connection of the flow channels in accordance with a rotational position, a valve stem that is attached to the valve member along a rotation axis of the valve member, and a drive unit that rotates the valve member via the valve stem. The flow channel switching valve includes a rotation angle output shaft that is press-fitted into an attachment hole provided in an end surface of the valve stem; and a rotation angle detection unit that detects a rotation angle of the rotation angle output shaft around the rotation axis. The rotation angle output shaft is supported rotatably around the rotation axis in the attachment hole in an inserted state before being press-fitted into the attachment hole.

In the present invention, the attachment hole includes a press-fit portion into which a portion of the rotation angle output shaft is press-fitted, and a guide portion with which another portion of the rotation angle output shaft comes into contact slidably in an insertion direction and a circumferential direction.

In the present invention, it is preferable that the rotation angle detection unit include a rotor and a signal output unit that outputs a signal corresponding to a rotation angle of the rotor, the rotor be provided with a fitting hole through which a fitting shaft portion provided at one end portion of the rotation angle output shaft passes, and the fitting shaft portion be fitted to the fitting hole such that the rotor rotates together with the fitting shaft portion.

In the present invention, it is preferable that the flow channel switching valve further include a base body to which the rotation angle detection unit is attached; and the base body be fixed to the valve body, and a through hole through which the rotation angle output shaft passes be provided at a position at which the rotation angle detection unit is attached.

To attain the above-described object, a method for assembling a flow channel switching valve according to another aspect of the present invention is a method for assembling a flow channel switching valve including a valve body provided with a valve chamber and a plurality of flow channels that communicate with the valve chamber, a valve member that is rotatably housed in the valve chamber and that switches connection of the flow channels in accordance with a rotational position, a valve stem that is attached to the valve member along a rotation axis of the valve member, a drive unit that rotates the valve member via the valve stem, a rotation angle output shaft that is press-fitted into an attachment hole provided in an end surface of the valve stem, and a rotation angle detection unit that detects a rotation angle of the rotation angle output shaft around the rotation axis. The method includes rotating the rotation angle output shaft inserted into the attachment hole of the valve stem around the rotation axis to perform positioning, then further inserting the rotation angle output shaft, and press-fitting the rotation angle output shaft into the attachment hole.

### Advantageous Effects of Invention

According to the present invention, the rotation angle output shaft that is press-fitted into the attachment hole provided in the end surface of the valve stem is supported rotatably around the rotation axis in the attachment hole in the inserted state before being press-fitted into the attachment hole. With this configuration, in the state in which the rotation angle output shaft has been inserted into the attachment hole, the rotation angle output shaft can be rotated around the rotation axis to perform positioning. Accordingly, it is possible to further reduce an error of the output of the rotation angle detection unit due to the tolerances of the valve member, the valve stem, and the rotation angle detection unit. Thus, it is possible to effectively improve the precision of the rotational position of the valve member.

### Brief Description of Drawings

[Fig. 1] Fig. 1 is a perspective view including a partial section of a flow channel switching valve according to an embodiment of the present invention.
[Fig. 2] Fig. 2 is a sectional view taken along line A-A of Fig. 1.
[Fig. 3] Fig. 3 is a six sided view of a ball valve member included in the flow channel switching valve of Fig. 1.
[Fig. 4] Fig. 4 is a view for explaining a method for assembling the flow channel switching valve of Fig. 1 and illustrates a state in which a gear is about to be attached after a valve stem is attached to the valve member.
[Fig. 5] Fig. 5 is a view for explaining the method for assembling the flow channel switching valve of Fig. 1 and illustrates a state in which a potentiometer shaft is about to be inserted into an attachment hole of the valve stem.
[Fig. 6] Fig. 6 is a view for explaining the method for assembling the flow channel switching valve of Fig. 1 and illustrates a state in which a potentiometer base is about to be fixed to a valve body.
[Fig. 7] Fig. 7 is a view for explaining the method for assembling the flow channel switching valve of Fig. 1 and illustrates a state in which a potentiometer is about to be attached to the potentiometer base.
[Fig. 8] Fig. 8 is a view for explaining the method for assembling the flow channel switching valve of Fig. 1 and illustrates a state in which the position of the potentiometer shaft is adjusted after the potentiometer is attached to the potentiometer base.
[Fig. 9] Fig. 9 is a view for explaining the method for assembling the flow channel switching valve of Fig. 1 and illustrates a state in which the potentiometer shaft is press-fitted into the attachment hole of the valve stem.
[Fig. 10] Fig. 10 is a perspective view illustrating a configuration of a modification of the flow channel switching valve of Fig. 1.
[Fig. 11] Fig. 11 is a perspective view illustrating a drive unit included in the flow channel switching valve of Fig. 10.

### Description of Embodiments

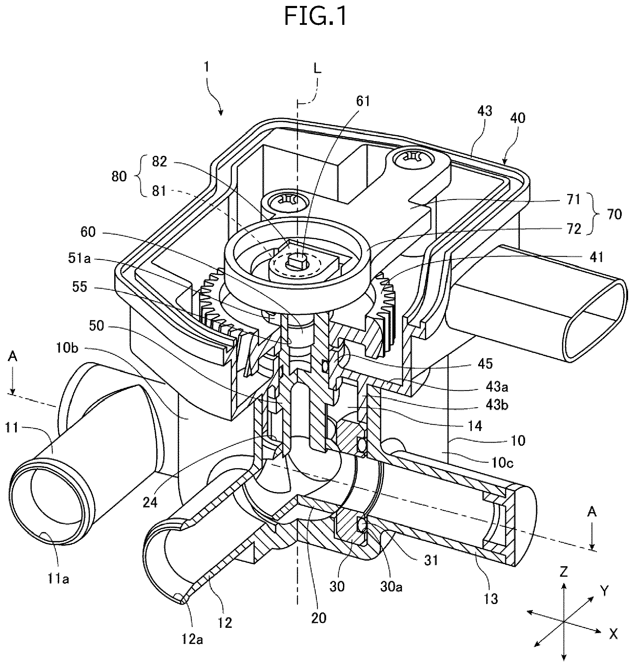

A configuration of a flow channel switching valve according to an embodiment of the present invention will be described below with reference to Figs. 1 to 3.

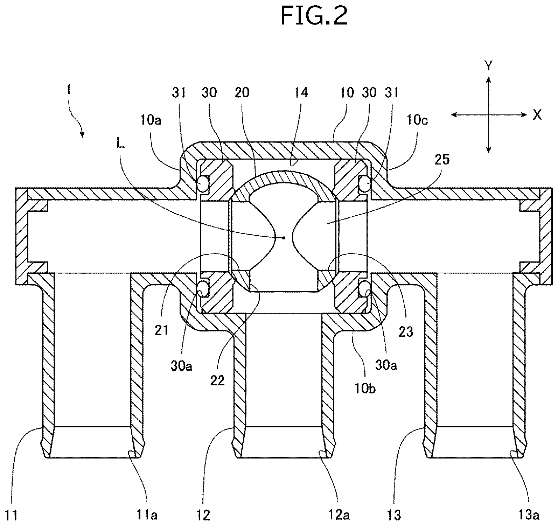

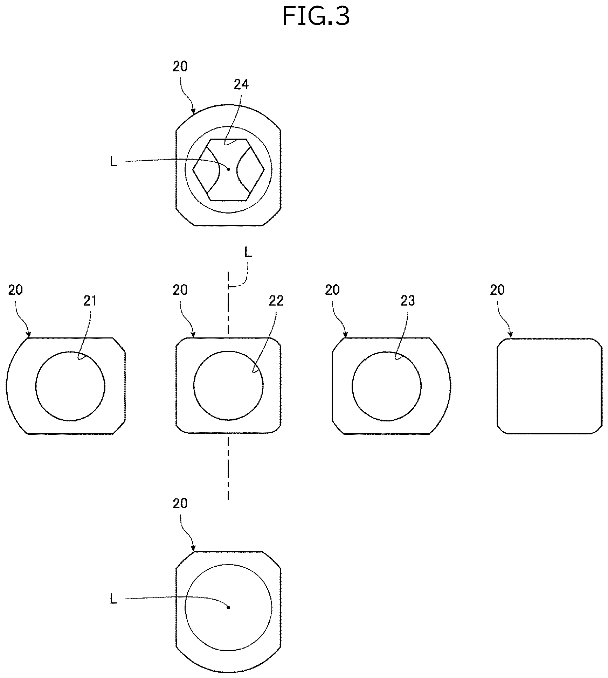

Fig. 1 is a perspective view including a partial section of the flow channel switching valve according to the embodiment of the present invention. Fig. 2 is a sectional view taken along line A-A of Fig. 1. Fig. 3 is a six sided view of a ball valve member included in the flow channel switching valve of Fig. 1. In the following description, " upper, lower, left, and right" are used to indicate the relative positional relationship between respective components in each of the drawings, but do not indicate the absolute positional relationship. In each of the drawings, a left-right direction is defined as an X-axis direction, a front-back direction is defined as a Y-axis direction, and an up-down direction is defined as a Z-axis direction. The X axis, the Y axis, and the Z axis are orthogonal to one another.

As illustrated in Figs. 1 and 2, a flow channel switching valve 1 of the present embodiment includes a valve body 10, a ball valve member 20, seat members 30, 30, sealing members 31, 31, a drive unit 40, and a valve stem 50. The flow channel switching valve 1 also includes a potentiometer shaft 60 that is a rotation angle output shaft, a potentiometer base 70 that is a base body, and a potentiometer 80 that is a rotation angle detection unit.

The valve body 10 is made of synthetic resin and formed in a substantially cubic box shape. A substantially L-shaped first flow channel 11 is provided in a left wall portion 10a of the valve body 10. A straight second flow channel 12 is provided in a front wall portion 10b of the valve body 10. A substantially L-shaped third flow channel 13 is provided in a right wall portion 10c of the valve body 10. The third flow channel is plane-symmetrical to the first flow channel 11. An opening 11a of the first flow channel 11, an opening 12a of the second flow channel 12, and an opening 13a of the third flow channel 13 face the front direction (the forward direction from the paper in Fig. 1, downward in Fig. 2). The first flow channel 11, the second flow channel 12, and the third flow channel 13 communicate with a valve chamber 14 provided in the valve body 10. As the flow channels that communicate with the valve chamber 14, two or four or more flow channels may be provided.

The ball valve member 20 is formed in a hollow ball-like shape (spherical shape). The ball valve member 20 is made of, for example, metal or synthetic resin. The ball valve member 20 is rotatably supported by the seat members 30, 30 (described later) and housed in the valve chamber 14. At the rotational position illustrated in Fig. 2, the ball valve member 20 has a first opening 21 open toward the left side, a second opening 22 open toward the front side, and a third opening 23 open toward the right side. A switching flow path 25 that connects the first opening 21, the second opening 22, and the third opening 23 to one another is provided inside the ball valve member 20. The switching flow path 25 is formed in a substantially T-like shape in plan view. Alternatively, the ball valve member 20 may have, for example, only the first opening 21 and the second opening 22, and may be provided with a switching flow path 25 that is substantially L-shaped in plan view and connects the first opening 21 and the second opening 22 to each other at the rotational position illustrated in Fig. 2. Although the ball valve member 20 is used as a valve member in the present embodiment, a columnar valve member may be used.

The switching flow path 25 is configured to switch the connection of the first flow channel 11, the second flow channel 12, and the third flow channel 13 in accordance with the rotational position. Specifically, the switching flow path 25 connects the first flow channel 11, the second flow channel 12, and the third flow channel 13 to one another when the ball valve member 20 is at the rotational position illustrated in Fig. 2. The switching flow path 25 connects the first flow channel 11 and the second flow channel 12 to each other when the ball valve member 20 is at a rotational position rotated 90 degrees clockwise in plan view from the rotational position illustrated in Fig. 2. The switching flow path 25 connects the second flow channel 12 and the third flow channel 13 to each other when the ball valve member 20 is at a rotational position rotated 90 degrees counterclockwise in plan view from the rotational position illustrated in Fig. 2.

A valve stem insertion hole 24 into which the valve stem 50 (described later) is inserted is provided in an upper portion of the ball valve member 20. The valve stem insertion hole 24 is formed such that the ball valve member 20 rotates around an axis L that is a rotation axis of the ball valve member 20 as the valve stem 50 rotates. Specifically, the valve stem insertion hole 24 is formed in the same shape as the sectional shape (cross-sectional shape) in the direction orthogonal to the axial direction of an angular columnar portion 52 of the valve stem 50. In the present embodiment, the valve stem insertion hole 24 is formed in a regular hexagonal shape (Fig. 3).

The seat members 30, 30 are made of, for example, synthetic resin such as polytetrafluoroethylene (PTFE) and are formed in an annular shape. The seat members 30, 30 form a pair. The seat members 30, 30 are housed in the valve chamber 14. The seat members 30, 30 are disposed to face each other with a gap in the X-axis direction. The seat members 30, 30 rotatably support the ball valve member 20 in the valve chamber 14 with the ball valve member 20 interposed therebetween.

The sealing members 31, 31 each are, for example, an O-ring made of an elastic material such as a rubber material. The sealing member 31 is disposed to be sandwiched in a compressed state between one of the seat members 30 and the left wall portion 10a of the valve body 10. The sealing member 31 is disposed to be sandwiched in a compressed state between the other of the seat members 30 and the right wall portion 10c of the valve body 10. In the present embodiment, the sealing member 31 is mounted in an annular groove 30a provided in the seat member 30. Part of the sealing member 31 protrudes from the annular groove 30a. The sealing members 31, 31 seal gaps between the valve body 10 and the ball valve member 20 together with the seat members 30, 30. Alternatively, the sealing members 31, 31 may be omitted, and seat members 30, 30 made of an elastic material such as a rubber material and also having a function of a sealing member may be employed.

The drive unit 40 includes a drive mechanism, a lower case 43, and an upper case (not illustrated). The drive mechanism includes a combination of a motor (not illustrated) and a speed reducer that includes a gear 41. The lower case 43 and the upper case are made of resin and in which the drive mechanism is housed. The upper case is attached to the lower case 43 by an attachment structure such as a screwing structure or a snap-fit structure. The drive unit 40 rotates the ball valve member 20 around the axis L via the valve stem (described later).

The lower case 43 integrally has a circular tubular bearing portion 45 at the center of a bottom wall 43a. The valve stem 50 is inserted into the bearing portion 45. The bearing portion 45 rotatably supports the valve stem 50. An inner peripheral wall portion 43b having a quadrangular tubular shape is provided on the bottom wall 43a of the lower case 43. The inner peripheral wall portion 43b is disposed inside the valve body 10 and combined with an upper end portion of the valve body 10. The inner peripheral wall portion 43b and the valve body 10 are joined (in the present embodiment, ultrasonically welded). Alternatively, the lower case 43 and the valve body 10 may be assembled with each other by a screwing structure or the like.

The valve stem 50 is made of synthetic resin and is formed in a columnar shape extending straight as a whole. The valve stem 50 includes a circular columnar portion 51 and the angular columnar portion 52 coaxially connected to a lower end of the circular columnar portion 51. The valve stem 50 is disposed along the axis L.

The circular columnar portion 51 has an annular stopper portion 53 provided at a lower end portion of the circular columnar portion 51 and protruding radially outward. The stopper portion 53 is formed to have an outer diameter larger than the inner diameter of the bearing portion 45.

Moreover, the circular columnar portion 51 has a groove provided in the lower end portion over the entire circumference at a position above the stopper portion 53. An annular O-ring 54 made of a rubber material or the like is fitted to the groove. The circular columnar portion 51 is inserted into the bearing portion 45 and rotatably supported by the bearing portion 45. The outer diameter of the circular columnar portion 51 is slightly smaller than the inner diameter of the bearing portion 45. When the circular columnar portion 51 is inserted into the bearing portion 45, the O-ring 54 seals a gap between the valve stem 50 and the bearing portion 45. The sealing with the O-ring 54 prevents the fluid in the valve chamber 14 from leaking to the outside.

The gear 41 of the drive mechanism of the drive unit 40 is press-fitted onto an upper end portion of the circular columnar portion 51. Moreover, the upper end portion of the circular columnar portion 51 is provided with a planar portion 51a for preventing the press-fitted gear 41 from slipping. The gear 41 may be attached to the valve stem 50 by a method other than press-fitting.

The angular columnar portion 52 is formed in a columnar shape having a regular hexagonal cross-sectional shape. The angular columnar portion 52 is inserted into the valve stem insertion hole 24 of the ball valve member 20, and is attached to the ball valve member 20 along the axis L. The axis L of the ball valve member 20 serves as a rotation axis of the valve stem 50. The valve stem 50 is rotated around the axis L as the gear 41 rotates. The valve stem insertion hole 24 is formed in the same regular hexagonal shape as the cross-sectional shape of the angular columnar portion 52. Thus, the valve stem insertion hole 24 and the angular columnar portion 52 are fitted to each other. The ball valve member 20 is rotated around the axis L as the valve stem 50 rotates. The angular columnar portion 52 is formed to have an outer diameter smaller than that of the stopper portion 53.

The angular columnar portion 52 may have a polygonal columnar shape such as a triangular columnar shape or a quadrangular columnar shape, or a columnar shape having a D-shaped section in which part of the side surface of a circular column is formed as a plane, other than the regular hexagonal shape. In this case, the valve stem insertion hole 24 is also formed in the same shape as the cross-sectional shape of the angular columnar portion 52.

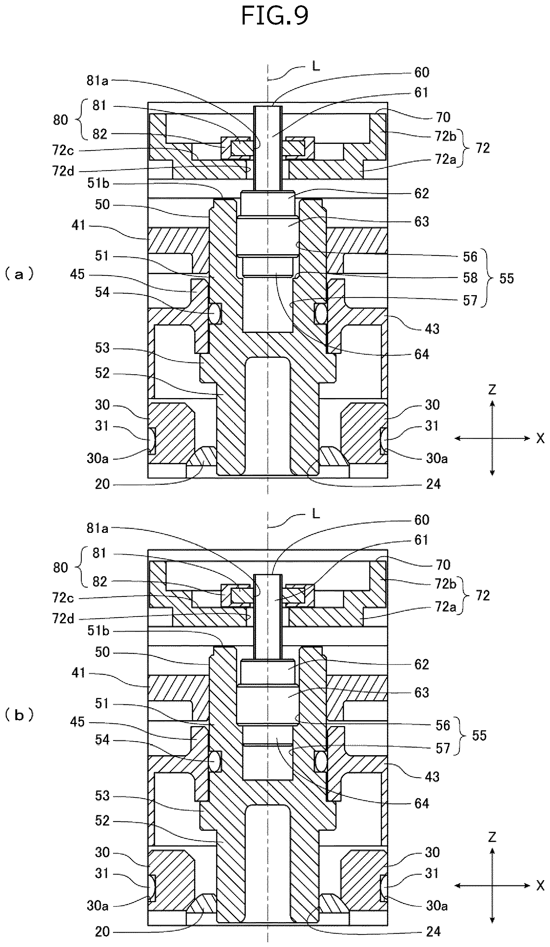

Moreover, an attachment hole 55 is provided at the center of an upward facing end surface 51b of the circular columnar portion 51. The attachment hole 55 has a substantially circular columnar inner space along the axis L. The attachment hole 55 has a guide portion 56 and a press-fit portion 57 coaxially connected to the lower side of the guide portion 56 (Fig. 9). The guide portion 56 and the press-fit portion 57 have circular cross-sectional shapes. The attachment hole 55 is formed such that the diameter of the guide portion 56 is larger than the diameter of the press-fit portion 57. A step portion 58 is provided between the guide portion 56 and the press-fit portion 57.

A small-diameter portion 64 that is a portion of the potentiometer shaft 60 (described later) is press-fitted into the press-fit portion 57. A large-diameter portion 63 that is another portion of the potentiometer shaft 60 is in contact with the guide portion 56 slidably in the direction of the axis L (insertion direction) and the circumferential direction.

The potentiometer shaft 60 is made of metal such as stainless steel or brass, or synthetic resin such as polyphenylene sulfide (PPS). The potentiometer shaft 60 is a separate component from the valve stem 50. The potentiometer shaft 60 is press-fitted into the attachment hole 55 of the valve stem 50. The potentiometer shaft 60 is fixedly attached coaxially to the valve stem 50 by press-fitting. The potentiometer shaft 60 includes a fitting shaft portion 61, an intermediate portion 62, the large-diameter portion 63, and the small-diameter portion 64 sequentially from the upper side to the lower side in the axial direction of the potentiometer shaft 60.

The fitting shaft portion 61 is formed in a columnar shape (so-called D-cut shape) having a D-shaped section in which part of the side surface of a circular column is formed as a plane. The fitting shaft portion 61 is provided at one end portion of the potentiometer shaft 60, and is fitted to a rotor 81 of the potentiometer 80 (described later). At least the distal end of the fitting shaft portion 61 protrudes from the attachment hole 55. The intermediate portion 62 is formed in a circular columnar shape. The intermediate portion 62 connects the fitting shaft portion 61 and the large-diameter portion 63. The large-diameter portion 63 is formed in a circular columnar shape having the same diameter (including substantially the same diameter) as the diameter of the guide portion 56 of the attachment hole 55. The small-diameter portion 64 is formed in a circular columnar shape having a diameter smaller than the diameter of the large-diameter portion 63 and larger than the diameter of the press-fit portion 57 of the attachment hole 55.

The potentiometer base 70 is made of synthetic resin. The potentiometer base 70 integrally has a base body portion 71 and a meter attachment portion 72. The base body portion 71 is formed in a substantially flat plate shape. The base body portion 71 is fixed to bosses 43c, 43c protruding upward from the bottom wall 43a of the lower case 43 by screws 78, 78. The meter attachment portion 72 has a disk-shaped bottom wall portion 72a and a peripheral wall portion 72b standing upward from the peripheral edge of the bottom wall portion 72a. A recess 72c is provided at the center of the bottom wall portion 72a. The recess 72c is a portion to which the potentiometer 80 (described later) is attached. Moreover, a through hole 72d is provided in the recess 72c. The fitting shaft portion 61 of the potentiometer shaft 60 is passed through the through hole 72d. The diameter of the through hole 72d is larger than the diameter of the fitting shaft portion 61.

The potentiometer 80 is a rotation angle sensor for detecting a rotation angle. The potentiometer 80 has the disk-shaped rotor 81 and a meter body portion 82. The meter body portion 82 rotatably supports the rotor 81. The meter body portion 82 is a signal output unit that outputs a signal (voltage) corresponding to the rotation angle of the rotor 81. A fitting hole 81a having a D-like shape in plan view is provided at the center of the rotor 81. The fitting shaft portion 61 of the potentiometer shaft 60 passes through the fitting hole 81a. The fitting shaft portion 61 is fitted to the fitting hole 81a so that the rotor 81 rotates together with the fitting shaft portion 61. Rotation of the fitting shaft portion 61 makes the rotor 81 rotating. Thus, the potentiometer 80 detects the rotation angle of the potentiometer shaft 60 around the axis L.

In the flow channel switching valve 1, the rotation of the motor of the drive unit 40 is output to the valve stem 50 through the gear 41. The valve stem 50 is rotated around the axis L. The ball valve member 20 is rotated around the axis L as the valve stem 50 rotates, and is positioned at each rotational position. Thus, the connection of the flow channels corresponding to the rotational position is provided. Moreover, the potentiometer shaft 60 is rotated around the axis L together with the valve stem 50. A signal corresponding to the rotation angle of the potentiometer shaft 60 is output from the potentiometer 80. The rotational position of the ball valve member 20 can be monitored based on the signal output from the potentiometer 80.

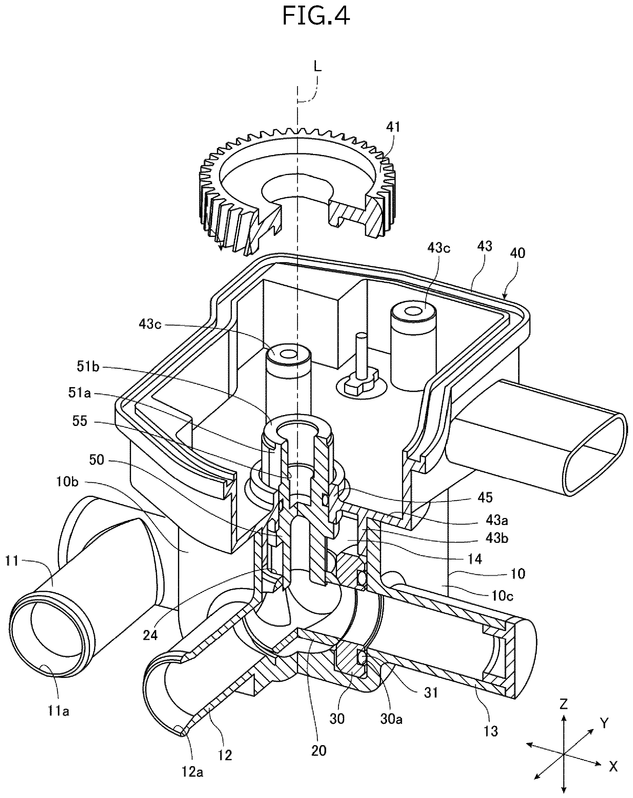

Next, an example of a method for assembling the flow channel switching valve 1 of the present embodiment will be described with reference to Figs. 4 to 9.

Figs. 4 to 9 are views for explaining a method for assembling the flow channel switching valve of Fig. 1, and are, sequentially, (1) a perspective view illustrating a state in which a gear is about to be attached after a valve stem is attached to a valve member, (2) a perspective view illustrating a state in which a potentiometer shaft is about to be inserted into an attachment hole of the valve stem, (3) a perspective view illustrating a state in which a potentiometer base is about to be fixed to a valve body, (4) a perspective view illustrating a state in which a potentiometer is about to be attached to the potentiometer base, (5) a perspective view illustrating a state in which the position of the potentiometer shaft is adjusted after the potentiometer is attached to the potentiometer base, and (6) a sectional view illustrating a state in which the potentiometer shaft is press-fitted into the attachment hole of the valve stem. Fig. 9(a) illustrates a state in which the potentiometer shaft has been inserted into the attachment hole of the valve stem (inserted state before being press-fitted), and Fig. 9(b) illustrates a state in which the potentiometer shaft has been press-fitted into and fixed to the attachment hole of the valve stem.

First, the ball valve member 20, the seat members 30, 30, and the sealing members 31, 31 are housed in the valve chamber 14 of the valve body 10. Then, a jig (not illustrated) is inserted from the second flow channel 12 to position the ball valve member 20. The angular columnar portion 52 of the valve stem 50 is inserted into the valve stem insertion hole 24 to attach the valve stem 50 to the ball valve member 20. In this state, the valve stem 50 is disposed along the axis L (Z-axis direction). Then, the valve body 10 and the lower case 43 are assembled with each other while the circular columnar portion 51 of the valve stem 50 is inserted into the bearing portion 45. Ultrasonic waves are applied to the lower case 43 to ultrasonically weld the lower case 43 to the valve body 10.

Next, as illustrated in Fig. 4, the circular columnar portion 51 of the valve stem 50 is press-fitted into the gear 41, and other components (not illustrated) constituting the drive mechanism are assembled with the lower case 43.

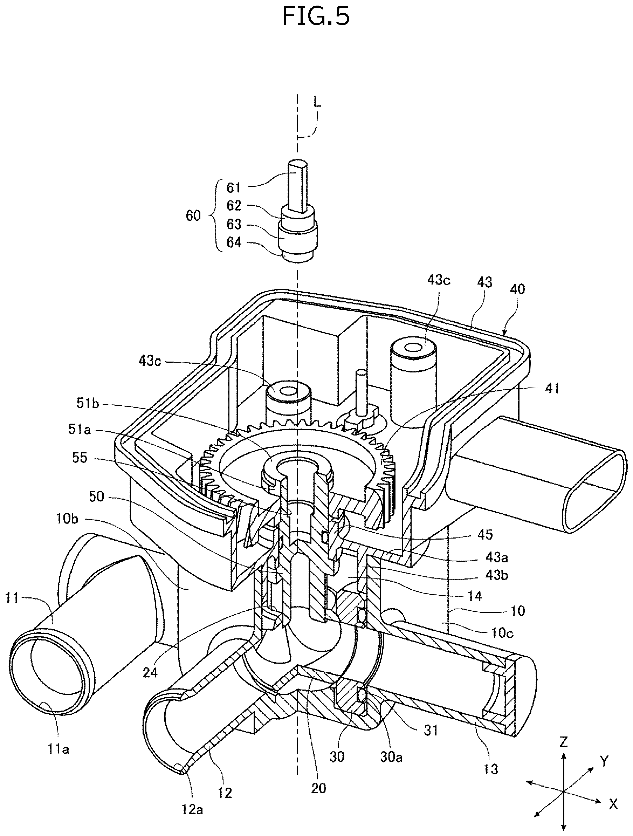

Next, as illustrated in Fig. 5, the potentiometer shaft 60 is inserted into the attachment hole 55 of the valve stem 50. Specifically, the potentiometer shaft 60 is inserted into the attachment hole 55 from the small-diameter portion 64, and the large-diameter portion 63 is inserted into the attachment hole 55 following the small-diameter portion 64. The diameter of the large-diameter portion 63 of the potentiometer shaft 60 is the same as the diameter of the guide portion 56. The outer peripheral surface of the large-diameter portion 63 comes into contact with the inner peripheral surface of the guide portion 56 slidably in the insertion direction and the circumferential direction. As described above, since the large-diameter portion 63 and the guide portion 56 are provided, it is possible to prevent the potentiometer shaft 60 from being inserted in an inclined manner with respect to the valve stem 50. The potentiometer shaft 60 is guided coaxially with the valve stem 50 along the axis L. Then, the potentiometer shaft 60 is further inserted until the small-diameter portion 64 abuts against the step portion 58 of the attachment hole 55. At this time, the potentiometer shaft 60 is in the inserted state before being press-fitted. The fitting shaft portion 61 of the potentiometer shaft 60 protrudes from the attachment hole 55.

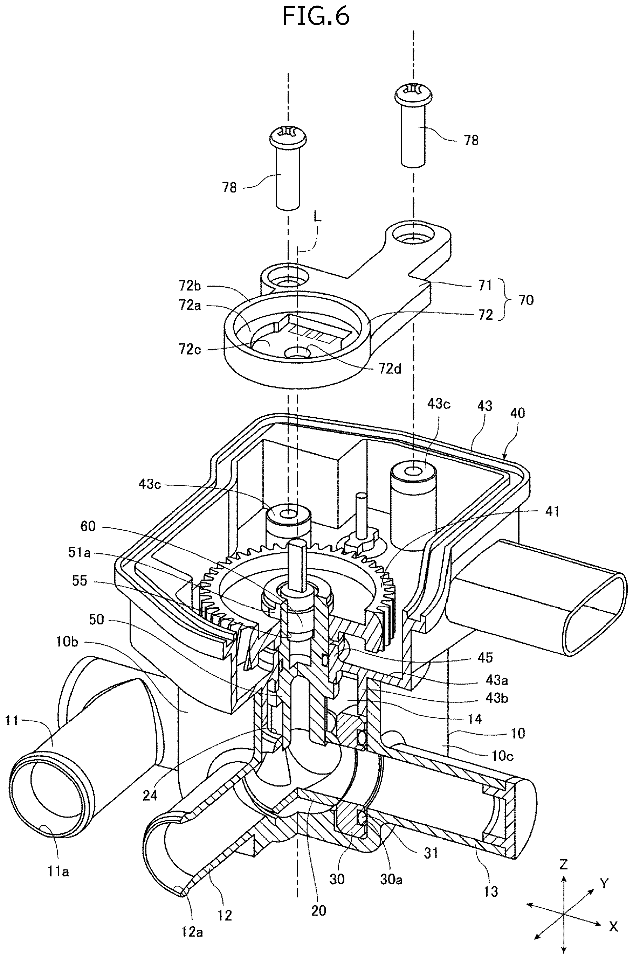

Next, as illustrated in Fig. 6, the fitting shaft portion 61 of the potentiometer shaft 60 is passed through the through hole 72d provided in the meter attachment portion 72 of the potentiometer base 70. The potentiometer base 70 is disposed on the bosses 43c, 43c of the lower case 43. Then, the screws 78, 78 are screwed into the bosses 43c, 43c to fix the potentiometer base 70 to the lower case 43. The lower case 43 is joined to the valve body 10 by ultrasonic welding. Thus, the potentiometer base 70 is fixed with respect to the valve body 10.

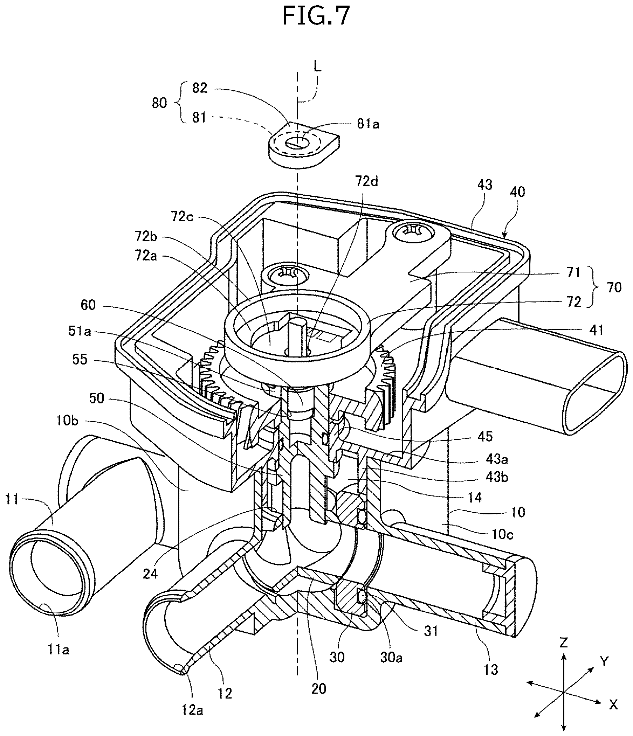

Next, as illustrated in Fig. 7, the fitting shaft portion 61 of the potentiometer shaft 60 is passed through the fitting hole 81a provided in the rotor 81 of the potentiometer 80, and the fitting shaft portion 61 is fitted to the fitting hole 81a. The potentiometer 80 is disposed in the recess 72c of the meter attachment portion 72 of the potentiometer base 70. The potentiometer 80 is attached and fixed by soldering or the like. Alternatively, the potentiometer base 70 may be fixed to the lower case 43 after the potentiometer 80 is attached to the potentiometer base 70.

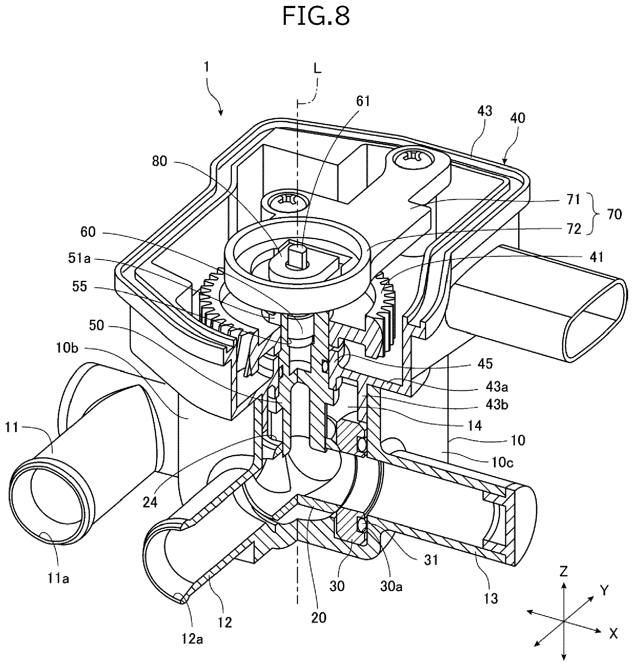

Next, the potentiometer shaft 60 is positioned around the axis L. That is, as illustrated in Figs. 8 and 9(a), the potentiometer shaft 60 fitted to the fitting hole 81a of the rotor 81 is rotated around the axis L in the attachment hole 55 so that a correct signal is output from the potentiometer 80 with respect to the rotational position of the ball valve member 20. After the positioning of the potentiometer shaft 60 is completed, as illustrated in Fig. 9(b), the potentiometer shaft 60 is further inserted and pushed downward. In this manner, the small-diameter portion 64 of the potentiometer shaft 60 is press-fitted into the press-fit portion 57 of the attachment hole 55. The potentiometer shaft 60 is fixed to the valve stem 50 in a state in which the potentiometer shaft 60 has been positioned.

Finally, the upper case (not illustrated) is attached to the lower case 43 to complete the flow channel switching valve 1.

As described above, according to the flow channel switching valve 1 of the present embodiment, the potentiometer shaft 60 that is press-fitted into the attachment hole 55 provided in the end surface 51b of the valve stem 50 is supported rotatably around the axis L in the attachment hole 55 in the inserted state before being press-fitted into the attachment hole 55. With this configuration, in the state in which the potentiometer shaft 60 has been inserted into the attachment hole 55, the potentiometer shaft 60 can be rotated around the axis L to perform positioning. Accordingly, it is possible to further reduce an error of the output of the potentiometer 80 due to the tolerances of the ball valve member 20, the valve stem 50, and the potentiometer 80. Thus, it is possible to effectively improve the precision of the rotational position of the ball valve member 20.

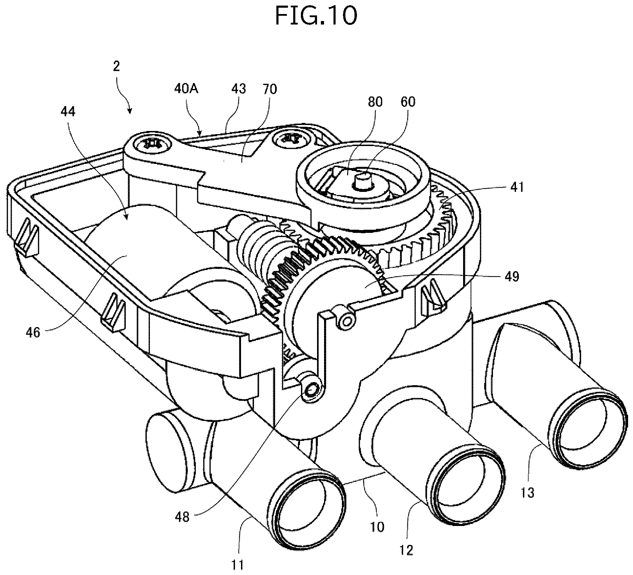

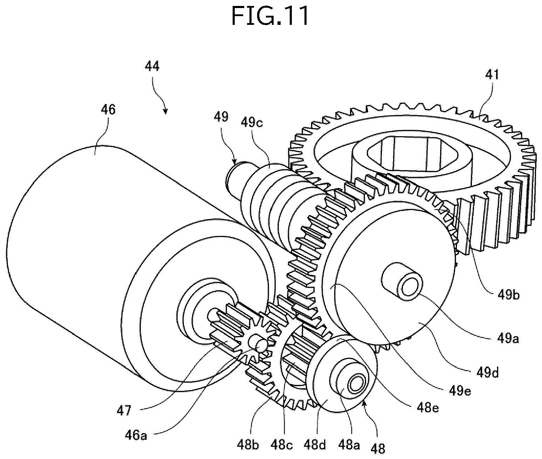

Next, a flow channel switching valve 2 illustrated in Figs. 10 and 11 as a modification of the above-described flow channel switching valve 1 will be described.

Like the flow channel switching valve 1, the flow channel switching valve 2 includes a valve body 10, a ball valve member 20, seat members 30, 30, sealing members 31, 31, a drive unit 40A, a valve stem 50, a potentiometer shaft 60 that is a rotation angle output shaft, a potentiometer base 70 that is a base body, and a potentiometer 80 that is a rotation angle detection unit. The flow channel switching valve 2 has a configuration similar to or the same as that of the flow channel switching valve 1 except that the flow channel switching valve 2 includes the drive unit 40A instead of the drive unit 40 in the flow channel switching valve 1 described above. The drive unit 40A will be described below. In Figs. 10 and 11, the ball valve member 20, the seat members 30 and 30, and the sealing members 31, 31 are not illustrated.

The drive unit 40A includes a lower case 43 and a drive mechanism 44. The drive mechanism 44 includes a motor 46, a driving gear 47, a first intermediate gear 48, a second intermediate gear 49, and the gear 41.

The driving gear 47 is attached to a rotating shaft 46a of the motor 46. The first intermediate gear includes a shaft portion 48a, a large-diameter gear portion 48b, a small-diameter gear portion 48c, and a small-diameter disk portion 48d. The second intermediate gear 49 includes a shaft portion 49a, a spur gear portion 49b, a worm portion 49c, and a large-diameter disk portion 49d.

The large-diameter gear portion 48b of the first intermediate gear 48 meshes with the driving gear 47, and the small-diameter gear portion 48c of the first intermediate gear 48 meshes with the spur gear portion 49b of the second intermediate gear 49. The worm portion 49c of the second intermediate gear 49 meshes with the gear 41. Thus, the rotation of the rotating shaft 46a is transmitted to the gear 41 via the driving gear 47, the first intermediate gear 48, and the second intermediate gear 49. The gear 41 is fixed to the valve stem 50 by press-fitting, and the valve stem 50 is rotated by rotation of the gear 41. Then, the ball valve member 20 attached to the valve stem 50 is rotated and positioned at each rotational position.

A peripheral surface 48e of the small-diameter disk portion 48d of the first intermediate gear 48 and a peripheral surface 49e of the large-diameter disk portion 49d of the second intermediate gear 49 are in contact with each other. Thus, an inter-shaft distance between the first intermediate gear 48 and the second intermediate gear 49 is ensured, and noise, poor lubrication, gear damage, and gear wear can be suppressed.

Although the embodiments of the present invention have been described above, the present invention is not limited to these embodiments. Those skilled in the art may appropriately perform addition, deletion, or design change of a component with respect to the above-described embodiments, or may appropriately combine features of the embodiments. The modified or combined embodiments are included in the scope of the present invention as long as not impairing the scope of the present invention as defined by the appended claims.

### Reference Signs List

1, 2 ... flow channel switching valve, 10 ... valve body, 10a ... left wall portion, 10b ... front wall portion, 10c ... right wall portion, 11 ... first flow channel, 12 ... second flow channel, 13 ... third flow channel, 11a, 12a, 13a ... opening, 14 ... valve chamber, 20 ... ball valve member, 21 ... first opening, 22 ... second opening, 23 ... third opening, 24 ... valve stem insertion hole, 25 ... switching flow path, 30 ... seat member, 30a ... annular groove, 31 ... sealing member, 40 ... drive unit, 41 ... gear, 43 ... lower case, 43a ... bottom wall, 43b ... inner peripheral wall portion, 44 ... drive mechanism, 45 ... bearing portion, 46 ... motor, 46a ... rotating shaft, 47 ... driving gear, 48 ... first intermediate gear, 48a ... shaft portion, 48b ... large-diameter gear portion, 48c ... small-diameter gear portion, 48d ... small-diameter disk portion, 48e ... peripheral surface, 49 ... second intermediate gear, 49a ... shaft portion, 49b ... spur gear portion, 49c ... worm portion, 49d ... large-diameter disk portion, 49e ... peripheral surface, 50 ... valve stem, 51 ... circular columnar portion, 51a ... planar portion, 51b ... end surface, 52 ... angular columnar portion, 53 ... stopper portion, 54 ... O-ring, 55 ... attachment hole, 56 ... guide portion, 57 ... press-fit portion, 60 ... potentiometer shaft, 61 ... fitting shaft portion, 62 ... intermediate portion, 63 ... large-diameter portion, 64 ... small-diameter portion, 70 ... potentiometer base, 71 ... base body portion, 72 ... meter attachment portion, 72a ... bottom wall portion, 72b ... peripheral wall portion, 72c ... recess, 72d ... through hole, 80 ... potentiometer, 81 ... rotor, 81a ... fitting hole, 82 ... meter body portion

## Claims

1. A flow channel switching valve (1, 2) including a valve body (10) provided with a valve chamber (14) and a plurality of flow channels (11, 12, 13) that communicate with the valve chamber (14), a valve member (20) that is rotatably housed in the valve chamber (14) and that switches connection of the flow channels (11, 12, 13) in accordance with a rotational position, a valve stem (50) that is attached to the valve member (20) along a rotation axis of the valve member (20), and a drive unit (40) that rotates the valve member (20) via the valve stem (50), the flow channel switching valve (1, 2) comprising:
a rotation angle output shaft (60) that is press-fitted into an attachment hole (55) provided in an end surface of the valve stem (50); and
a rotation angle detection unit (80) that detects a rotation angle of the rotation angle output shaft (60) around the rotation axis,
wherein the attachment hole (55) and the rotation angle output shaft (60) are configured such that the rotation angle output shaft (60) is supported rotatably around the rotation axis in the attachment hole (55) in an inserted state before being press-fitted into the attachment hole (55),
wherein the attachment hole (55) includes a press-fit portion (57) into which a first portion (64) of the rotation angle output shaft (60) is press-fitted, and a guide portion (56) with which a second portion (63) of the rotation angle output shaft (60) comes into contact slidably in an insertion direction and a circumferential direction, and
wherein the second portion (63) is formed in a circular columnar shape having the same diameter as the diameter of the guide portion (56), and
the first portion (64) is formed in a circular columnar shape having a diameter smaller than the diameter of the second portion (63) and larger than the diameter of the press-fit portion (57).

2. The flow channel switching valve (1, 2) according to Claim 1,
wherein the rotation angle detection unit (80) includes a rotor (81) and a signal output unit (82) that outputs a signal corresponding to a rotation angle of the rotor (81),
wherein the rotor (81) is provided with a fitting hole (81a) through which a fitting shaft portion (61) provided at one end portion of the rotation angle output shaft (60) passes, and
wherein the fitting shaft portion (61) is fitted to the fitting hole (81a) such that the rotor (81) rotates together with the fitting shaft portion (61).

3. The flow channel switching valve (1, 2) according to Claim 1 or 2, further comprising:
a base body (71) to which the rotation angle detection unit (80) is attached,
wherein the base body (71) is fixed to the valve body (10), and a through hole (72d) through which the rotation angle output shaft (60) passes is provided at a position at which the rotation angle detection unit (80) is attached.

4. A method for assembling a flow channel switching valve (1, 2) including a valve body (10) provided with a valve chamber (14) and a plurality of flow channels (11, 12, 13) that communicate with the valve chamber (14), a valve member (20) that is rotatably housed in the valve chamber (14) and that switches connection of the flow channels (11, 12, 13) in accordance with a rotational position, a valve stem (50) that is attached to the valve member (20) along a rotation axis of the valve member (20), a drive unit (40) that rotates the valve member (20) via the valve stem (50), a rotation angle output shaft (60) that is press-fitted into an attachment hole (55) provided in an end surface of the valve stem (50), and a rotation angle detection unit (80) that detects a rotation angle of the rotation angle output shaft (60) around the rotation axis, the attachment hole (55) including a press-fit portion (57) into which a first portion (64) of the rotation angle output shaft (60) is press-fitted, and a guide portion (56) with which a second portion (63) of the rotation angle output shaft (60) comes into contact slidably in an insertion direction and a circumferential direction, the second portion (63) being formed in a circular columnar shape having the same diameter as the diameter of the guide portion (56), the first portion (64) is formed in a circular columnar shape having a diameter smaller than the diameter of the second portion (63) and larger than the diameter of the press-fit portion (57), the method comprising:
rotating the rotation angle output shaft (60) inserted into the attachment hole (55) of the valve stem (50) around the rotation axis to perform positioning, then further inserting the rotation angle output shaft (60), and press-fitting the rotation angle output shaft (60) into the attachment hole (55).

## Patentansprüche

1. Ein Strömungskanal-Umschaltventil (1, 2), umfassend einen Ventilkörper (10), mit einer Ventilkammer (14) und einer Vielzahl von Strömungskanälen (11, 12, 13), die mit der Ventilkammer (14) kommunizieren, ein Ventilelement (20), das drehbar in der Ventilkammer (14) aufgenommen ist und die Verbindung der Strömungskanäle (11, 12, 13) entsprechend der Drehposition umschaltet, einen Ventilschaft (50), der entlang einer Drehachse des Ventilelements (20) am Ventilelement (20) angeordnet ist, und eine Antriebseinheit (40), die das Ventilelement (20) über den Ventilschaft (50) dreht, wobei das Strömungskanal-Umschaltventil (1, 2) umfasst:
eine Drehwinkel-Ausgangswelle (60), die in ein Befestigungsloch (55) eingepresst ist, das auf einer Stirnfläche des Ventilschafts (50) ausgebildet ist; und
eine Drehwinkel-Erfassungseinheit (80), die einen Drehwinkel der Drehwinkel-Ausgangswelle (60) um die Drehachse erfasst,
wobei das Befestigungsloch (55) und die Drehwinkel-Ausgangswelle (60) dazu konfiguriert sind, die Drehwinkel-Ausgangswelle (60) in einem eingebrachten Zustand drehbar um die Drehachse in dem Befestigungsloch (55) zu lagern, bevor sie in das Befestigungsloch (55) eingepresst wird,
wobei das Befestigungsloch (55) einen Einpressbereich (57), in den ein erster Abschnitt (64) der Drehwinkel-Ausgangswelle (60) eingepresst wird, und einen Führungsbereich (56), mit dem ein zweiter Abschnitt (63) der Drehwinkel-Ausgangswelle (60) in Einführungsrichtung und Umfangsrichtung gleitend in Kontakt kommt, umfasst, und
wobei der zweite Abschnitt (63) in einer kreisförmig-säulenförmigen Form mit dem gleichen Durchmesser wie der Durchmesser des Führungsbereichs (56) ausgebildet ist, und
der erste Abschnitt (64) in einer kreisförmig-säulenförmigen Form mit einem Durchmesser kleiner als der Durchmesser des zweiten Abschnitts (63) und größer als der Durchmesser des Einpressbereichs (57) ausgebildet ist.

2. Strömungskanal-Umschaltventil (1, 2) nach Anspruch 1, wobei die Drehwinkel-Erfassungseinheit (80) einen Rotor (81) und eine Signalausgabeeinheit (82) umfasst, die ein Signal entsprechend einem Drehwinkel des Rotors (81) ausgibt,
wobei der Rotor (81) ein Passloch (81a) umfasst, durch das ein Passschaftabschnitt (61), der an einem Endabschnitt der Drehwinkel-Ausgangswelle (60) ausgebildet ist, hindurchgeht,
und wobei der Passschaftabschnitt (61) derart in das Passloch (81a) eingepasst ist, dass der Rotor (81) zusammen mit dem Passschaftabschnitt (61) rotiert.

3. Strömungskanal-Umschaltventil (1, 2) nach Anspruch 1 oder 2, weiter umfassend:
einen Grundkörper (71), an dem die Drehwinkel-Erfassungseinheit (80) angeordnet ist,
wobei der Grundkörper (71) an dem Ventilkörper (10) befestigt ist, und ein Durchgangsloch (72d), durch das die Drehwinkel-Ausgangswelle (60) hindurchgeht, an der Position aufweist, an der die Drehwinkel-Erfassungseinheit (80) angeordnet ist.

4. Ein Verfahren zum Zusammenbau eines Strömungskanal-Umschaltventils (1, 2), umfassend einen Ventilkörper (10), mit einer Ventilkammer (14) und einer Vielzahl von Strömungskanälen (11, 12, 13), die mit der Ventilkammer (14) kommunizieren, ein Ventilelement (20), das drehbar in der Ventilkammer (14) aufgenommen ist und die Verbindung der Strömungskanäle (11, 12, 13) entsprechend der Drehposition umschaltet, einen Ventilschaft (50), der entlang einer Drehachse des Ventilelements (20) am Ventilelement (20) angeordnet ist, eine Antriebseinheit (40), die das Ventilelement (20) über den Ventilschaft (50) dreht, eine Drehwinkel-Ausgangswelle (60), die in ein Befestigungsloch (55) eingepresst ist, das auf einer Stirnfläche des Ventilschafts (50) ausgebildet ist, und eine Drehwinkel-Erfassungseinheit (80), die einen Drehwinkel der Drehwinkel-Ausgangswelle (60) um die Drehachse erfasst, wobei das Befestigungsloch (55) einen Einpressbereich (57), in den ein erster Abschnitt (64) der Drehwinkel-Ausgangswelle (60) eingepresst wird, und einen Führungsbereich (56), mit dem ein zweiter Abschnitt (63) der Drehwinkel-Ausgangswelle (60) in Einführungsrichtung und Umfangsrichtung gleitend in Kontakt kommt, umfasst, wobei der zweite Abschnitt (63) in einer kreisförmig-säulenförmigen Form mit dem gleichen Durchmesser wie der Durchmesser des Führungsbereichs (56) ausgebildet ist, der erste Abschnitt (64) in einer kreisförmig-säulenförmigen Form mit einem Durchmesser kleiner als der Durchmesser des zweiten Abschnitts (63) und größer als der Durchmesser des Einpressbereichs (57) ausgebildet ist, das Verfahren umfassend:
Drehen der in das Befestigungsloch (55) des Ventilschafts (50) eingesetzten Drehwinkel-Ausgangswelle (60) um die Drehachse zur Positionierung, dann weiteres Einführen der Drehwinkel-Ausgangswelle (60) und Einpressen der Drehwinkel-Ausgangswelle (60) in das Befestigungsloch (55).

## Revendications

1. Soupape de commutation de canal d'écoulement (1, 2) incluant un corps de soupape (10) pourvu d'une chambre de soupape (14) et d'une pluralité de canaux d'écoulement (11, 12, 13) qui communiquent avec la chambre de soupape (14), un élément de soupape (20) qui est reçu de manière rotative dans la chambre de soupape (14) et qui commute un raccordement des canaux d'écoulement (11, 12, 13) en fonction d'une position de rotation, une tige de soupape (50) qui est fixée à l'élément de soupape (20) le long d'un axe de rotation de l'élément de soupape (20), et une unité d'entraînement (40) qui fait tourner l'élément de soupape (20) via la tige de soupape (50), la soupape de commutation de canal d'écoulement (1, 2) comportant :
un arbre de sortie d'angle de rotation (60) qui est ajusté de manière serrée dans un trou de fixation (55) ménagé dans une surface d'extrémité de la tige de soupape (50) ; et
une unité de détection d'angle de rotation (80) qui détecte un angle de rotation de l'arbre de sortie d'angle de rotation (60) autour de l'axe de rotation,
dans laquelle le trou de fixation (55) et l'arbre de sortie d'angle de rotation (60) sont configurés de telle sorte que l'arbre de sortie d'angle de rotation (60) est supporté en rotation autour de l'axe de rotation dans le trou de fixation (55) dans un état inséré avant d'être ajusté de manière serrée dans le trou de fixation (55),
dans laquelle le trou de fixation (55) inclut une partie d'ajustement serré (57) dans laquelle une première partie (64) de l'arbre de sortie d'angle de rotation (60) est ajustée de manière serrée, et une partie de guidage (56) avec laquelle une seconde partie (63) de l'arbre de sortie d'arbre de rotation (60) vient en contact de manière coulissante dans une direction d'insertion et une direction circonférentielle, et
dans laquelle la seconde partie (63) est formée en une forme colonnaire circulaire ayant le même diamètre que le diamètre de la partie de guidage (56), et
la première partie (64) est formée en une forme colonnaire circulaire ayant un diamètre plus petit que le diamètre de la seconde partie (63) et plus grand que le diamètre de la partie d'ajustement serré (57).

2. Soupape de commutation de canal d'écoulement (1, 2) selon la revendication 1,
dans laquelle l'unité de détection d'angle de rotation (80) inclut un rotor (81) et une unité de sortie de signal (82) qui délivre en sortie un signal correspondant à un angle de rotation du rotor (81),
dans laquelle le rotor (81) est pourvu d'un trou de montage (81a) à travers lequel passe une partie d'arbre de montage (61) agencée sur une partie d'extrémité de l'arbre de sortie d'angle de rotation (60), et
dans laquelle la partie d'arbre de montage (61a) est montée sur le trou de fixation (81a) de telle sorte que le rotor (81) tourne en association avec la partie d'arbre de montage (61).

3. Soupape de commutation de canal d'écoulement (1, 2) selon la revendication 1 ou 2, comportant en outre :
un corps de base (71) auquel l'unité de détection d'angle de rotation (80) est fixée,
dans laquelle le corps de base (71) est fixé au corps de soupape (10), et un trou traversant (72d) à travers lequel passe l'arbre de sortie d'angle de rotation (60) est ménagé à une position à laquelle l'unité de détection d'angle de rotation (80) est fixée.

4. Procédé pour assembler une soupape de commutation de canal d'écoulement (1, 2) incluant un corps de soupape (10) pourvu d'une chambre de soupape (14) et d'une pluralité de canaux d'écoulement (11, 12, 13) qui communiquent avec la chambre de soupape (14), un élément de soupape (20) qui est reçu de manière rotative dans la chambre de soupape (14) et qui commute un raccordement des canaux d'écoulement (11, 12, 13) en fonction d'une position de rotation, une tige de soupape (50) qui est fixée à l'élément de soupape (20) le long d'un axe de rotation de l'élément de soupape (20), une unité d'entraînement (40) qui fait tourner l'élément de soupape (20) via la tige de soupape (50), un arbre de sortie d'angle de rotation (60) qui est ajusté de manière serrée dans un trou de fixation (55) ménagé dans une surface d'extrémité de la tige de soupape (50), et une unité de détection d'angle de rotation (80) qui détecte un angle de rotation de l'arbre de sortie d'angle de rotation (60) autour de l'axe de rotation, le trou de fixation (55) incluant une partie d'ajustement serré (57) dans laquelle une première partie (64) de l'arbre de sortie d'angle de rotation (60) est ajustée de manière serrée, et une partie de guidage (56) avec laquelle une seconde partie (63) de l'arbre de sortie d'angle de rotation (60) vient en contact de manière coulissante dans une direction d'insertion et une direction circonférentielle, la seconde partie (63) étant formée en une forme colonnaire circulaire ayant le même diamètre que le diamètre de la partie de guidage (56), la première partie (64) est formée en une forme colonnaire circulaire ayant un diamètre plus petit que le diamètre de la seconde partie (63) et plus grand que le diamètre de la partie d'ajustement serré (57), le procédé comportant de :
faire tourner l'arbre de sortie d'angle de rotation (60) inséré dans le trou de fixation (55) de la tige de soupape (50) autour de l'axe de rotation pour réaliser un positionnement, puis insérer également l'arbre de sortie d'angle de rotation (60), et ajuster de manière serrée l'arbre de sortie d'angle de rotation (60) dans le trou de fixation (55).
